# EUROPÄISCHE PATENTANMELDUNG

(11) **EP 2 338 585 A1**
(43) Veröffentlichungstag der Anmeldung: **29.06.2011**
(21) Anmeldenummer: 10013923.7
(22) Anmeldetag: 25.10.2010
(51) Int. Cl.: B01D 53/94, F01N 3/08

(54) **Abgasreinigung bei Ottomotoren mit Direkteinspritzung unter Verwendung von Adsorbern mit Partikelabscheidefunktion**

(30) Priorität: 23.12.2009 DE 102009060290
(71) Anmelder: Volkswagen AG, 38436 Wolfsburg (DE)
(72) Erfinder: Seiler, Valeri, 29399 Wahrenholz (DE); Degen, Alf, 38536 Meinersen (DE)

(57) **Zusammenfassung**

Die Erfindung betrifft einen Adsorber mit Partikelabscheidefunktion, dessen Verwendung, eine Abgasreinigungsanlage eines Ottomotors mit Direkteinspritzung sowie ein Verfahren zur Reinigung von Abgas eines Ottomotors mit Direkteinspritzung.

Es ist vorgesehen, dass der Adsorber mit Partikelabscheidefunktion (16) einen keramischen Träger (26) sowie eine auf dem Träger (26) angeordnete Beschichtung (24) mit Zeolith aufweist.

## Beschreibung

Die Erfindung betrifft einen Adsorber mit Partikelabscheidefunktion, dessen Verwendung, eine Abgasreinigungsanlage eines Ottomotors mit Direkteinspritzung sowie ein Verfahren zur Reinigung von Abgas eines Ottomotors mit Direkteinspritzung.

Zur katalytischen Abgasreinigung bei Ottomotoren werden üblicherweise Dreiwegekatalysatoren eingesetzt, mit denen im Abgas enthaltenes Kohlenmonoxid, Stickoxide und Kohlenwasserstoffe zu unschädlichen Verbindungen umgesetzt werden. Ferner enthält das Abgas von Otto-Motoren und insbesondere von Ottomotoren mit direkter Einspritzung bedingt durch das inhomogene Kraftstoff-/Luftgemisch Verbrennungsrückstände in Partikelform, die überwiegend aus Ruß bestehen. Aber auch Ottomotoren, die homogen betrieben werden, weisen Partikelemissionen auf, jedoch nicht im gesamten Betriebskennfeld, sondern überwiegend im Kaltstart während die Lambdasonden-Regelung noch nicht aktiv ist.

Die Abgasgrenzwerte für Ottomotoren unterliegen einer stetigen Anpassung an die technischen Möglichkeiten der Abgasreinigung bzw. treiben diese voran. So wird mit der Euro6-Norm ein Partikel-Anzahl-Grenzwert (PN) bei existierendem niedrigen NMHC-Grenzwert (non methane hydrocarbons) eingeführt, während in den USA Planungen bestehen, den Flottenmittelwert von ULEV (Ultra Low Emissions Vehicle) auf SULEV (Super Ultra Low Emissions Vehicle) zu senken, wobei zudem Grenzwerte für Sub-SULEV diskutiert werden, die einer Halbierung der Grenzwerte für SULEV entsprechen.

Weiterhin kann neben der Verschärfung der Grenzwerte für gasförmige Abgasbestandteile auch eine deutliche Reduzierung der Grenzwerte für Partikel, nämlich für Partikel-Masse (PM) und Partikel-Anzahl (PN) erfolgen.

Die Einhaltung der kommenden Grenzwerte für ist nach derzeitigem Stand der Technik über die gesamte Fahrzeuglebensdauer bei Ottomotoren nicht sichergestellt, so dass ein Bedarf an alternativen Abgasnachbehandlungssystemen gegeben sein wird.

In der EP 2042225 A1 wird daher zur Entfernung von Partikeln aus dem Abgas von mit überwiegend stöchiometrischen Luft/Kraftstoffgemisch u.a. ein katalytisch aktives Partikelfilter vorgeschlagen, das geeignet ist, neben den gasförmigen Schadstoffen Kohlenmonoxid (CO), Kohlenwasserstoffe (HC) und Stickoxide (NOₓ) auch Partikel aus dem Abgas zu entfernen. Dieser Partikelfilter weist einen Filterkörper und eine zweilagige Beschichtung auf, die neben weiteren Bestandteilen Palladium enthält. Da edelmetallhaltige Beschichtungen einer Alterung durch Sintern unterliegen, ist nachteilhafterweise eine ausreichende, d. h. eine die neuen Grenzwerte erfüllende Funktion des katalytisch aktiven Partikelfilters über die gesamte Fahrzeuglebensdauer nicht gewährleistet.

Der Erfindung liegt die Aufgabe zugrunde, einen Adsorber mit einer Partikelabscheidefunktion, eine Abgasreinigungsanlage und ein Verfahren zur Reinigung der Abgase von Ottomotoren mit Direkteinspritzung zu schaffen, die gasförmige und feste Bestandteile aus dem Abgas von Ottomotoren mit Direkteinspritzung entfernen, wobei eine Lebensdauer des Adsorbers über die gesamte Fahrzeuglebensdauer gewährleistet sein soll.

Die Aufgabe wird durch ein Adsorber mit Partikelabscheidefunktion, dessen Verwendung eine Abgasreinigungsanlage und ein Verfahren zur Abgasreinigung mit den Merkmalen der Ansprüche 1, 2, 5 bzw. 6 gelöst.

Es ist erfindungsgemäß ein Adsorber mit Partikelabscheidefunktion vorgesehen, der zusätzlich eine Adsorberfunktion aufweist. Dazu weist der Adsorber einen keramischen Träger sowie eine auf dem Träger angeordnete Beschichtung mit Zeolith auf.

Beim Strömen des Abgases über den Adsorber werden Kohlenwasserstoffe und Stickoxide an der Beschichtung adsorbiert und zudem werden die Partikel aufgrund Ihrer Diffusionsbewegung auf der Oberfläche der Beschichtung abgeschieden.

Die Beschichtung kann die adsorbierten Kohlenwasserstoffe und Stickoxide in einem bestimmten Temperaturbereich kurzzeitig speichern. Wird der Adsorber durch das Abgas erwärmt, so beginnt bei 100 - 120 °C die Desorption der gasförmigen Bestandteile, die bei 300 °C vollständig erfolgt ist. Die desorbierten Bestandteile werden anschließend von einem nachgeordneten Dreiwegekatalysator konvertiert. Durch die Zwischenspeicherung der gasförmigen Bestandteile im Adsorber gelangen die gasförmigen Bestandteile erst mit einer zeitlichen Verzögerung in den Dreiwegekatalysator, so dass dieser nach einem Kaltstart, die zur Konvertierung erforderliche Betriebstemperatur aufweist. Dadurch steht für den nachgeschalteten 3-Wege-Katalysator mehr Zeit für eine Erwärmung auf die Anspringtemperatur zur Verfügung, so dass die aus dem Zeolith desorbierten Kohlenwasserstoffe sowie die übrigen gasförmigen Schadstoffkomponenten effizient konvertiert werden.

Ein Abbrand der im Adsorber gespeicherten kohlenstoffhaltigen Partikel erfolgt in üblicher Weise thermisch oder mittels NO₂ bzw..des CRT-Effekts.

Erfindungsgemäß wird somit der Adsorber zur temporären Zwischenspeicherung von gasförmigen Abgasbestandteilen, nämlich Kohlenwasserstoffen und/oder Stickoxiden eines Ottomotors verwendet.

Die Kombination des erfindungsgemäßen Adsorbers mit Partikelabscheidefunktion mit einem Dreiwegekatalysator reduziert die relevanten Bestandteile des Abgases soweit, dass die eingangs beschriebenen neuen Gesetzesanforderungen erfüllt werden. Da der Adsorber nicht mit Edelmetall beschichtet ist, zeigt die Beschichtung des Adsorbers keine Alterung über die gesamte Fahrzeuglebensdauer.

Eine erfindungsgemäß gestaltete Abgasreinigungsanlage eines Ottomotors mit Direkteinspritzung weist dementsprechend einen vorgenannten, edelmetallfreien Adsorber mit Partikelabscheidefunktion sowie einen nachgeordneten Dreiwegekatalysator auf.

Der Adsorber kann dauerhaft im Abgasstrom angeordnet sein, wie bei Direkteinspritzer-Ottomotoren mit inhomogenen Kraftstoff-/Luftgemisch, oder mittels eines Bypasssystems lediglich bis zum Erreichen der Betriebstemperatur des Dreiwegekatalysators, wie bei homogen betriebenen Ottomotoren mit Lambda =1. Somit ist bei letzter Variante der Gegendruck des Abgases nur kurz im Kaltstart bei sehr geringen Abgasvolumenströmen vorhanden. Hingegen kann bei erstgenannter Variante eine Abgasklappe eingespart werden, die wegen einer möglichen Fehlfunktion überwacht werden müsste.

Das entsprechende Verfahren zur Reinigung von Abgas eines Ottomotors mit Direkteinspritzung ist dadurch gekennzeichnet, dass das Abgas zur Entfernung von Kohlenwasserstoffen (HC), Stickoxiden (NOₓ) und Partikeln über den erfindungsgemäßen Adsorber und anschließend über einen Dreiwegekatalysator geleitet wird, wobei nach Erreichen einer definierten Temperatur des Dreiwegekatalysators der Adsorber, wie oben ausgeführt, nicht mehr mit Abgas beaufschlagt werden muss.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: in einer schematischen Darstellung ein Ottomotor mit Direkteinspritzung mit Abgasreinigungssystem, und
- Figur 2: in einer geschnittenen Detailansicht die Beschichtung des erfindungsgemäßen Adsorbers mit Partikelabscheidefunktion.

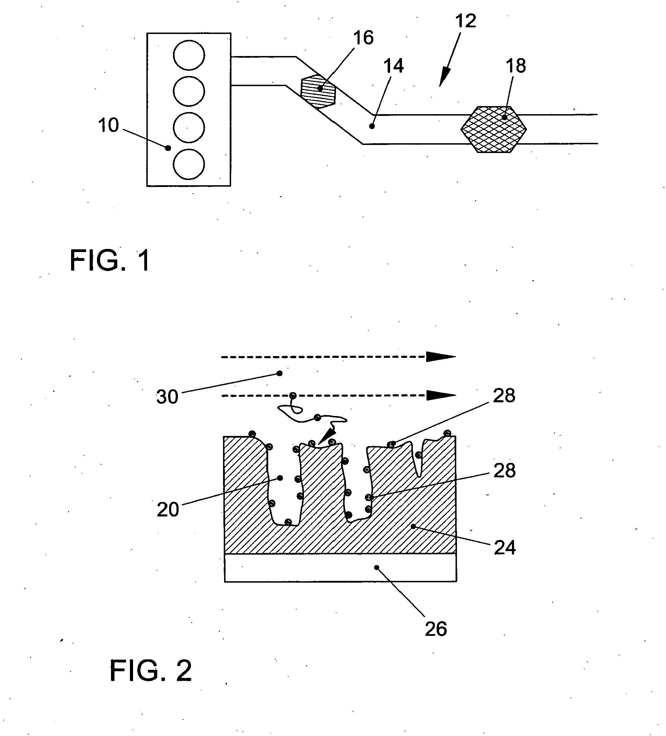

Figur 1 zeigt einen Ottomotor 10, an dem ein Abgasreinigungsanlage 12 angeordnet ist. Eine Abgasreinigungsanlage12 umfasst naturgemäß noch zahlreiche weitere Einrichtungen zur Steuerung und dergleichen, die hier nicht dargestellt sind. Das Abgasreinigungssystem 12 weist einen Abgaskanal 14 auf, in dem sich ein Adsorber mit Partikelabscheidefunktion 16 befindet, dem ein Dreiwegekatalysator 18 nachgeordnet ist.

In Figur 2 ist die mit Vertiefungen 20 behaftete Oberfläche 22 der Beschichtung 24 eines Trägers 26 des Adsorbers mit Partikelabscheidefunktion 16 aus Zeolith dargestellt. Die bei der motorischen Verbrennung entstehenden Partikel 28 sind so klein, dass diese überwiegend diffundieren und nicht mit dem Hauptstrom 30 des Abgases, der durch zwei gestrichelte Pfeile dargestellt ist, mitgerissen werden. Aus diesem Grund werden in dem Adsorber 16 die Partikel 28 in den Vertiefungen 20 des Zeolithen abgeschieden. Die Kohlenwasserstoffe und Stickoxide werden ebenfalls von der Beschichtung 24 zurückgehalten bzw. adsorbiert.

### Bezugszeichenliste

- 10: Ottomotor
- 12: Abgasreinigungsanlage
- 14: Abgaskanal
- 16: Adsorber mit Partikelabscheidefunktion
- 18: Dreiwegekatalysator
- 20: Vertiefung
- 22: Oberfläche
- 24: Beschichtung
- 26: Träger
- 28: Partikel
- 30: Hauptstrom des Abgases

## Patentansprüche

1. Adsorber mit Partikelabscheidefunktion, **dadurch gekennzeichnet, dass** der Adsorber (16) einen keramischen Träger (26) sowie eine auf dem Träger (26) angeordnete Beschichtung (24) mit Zeolith aufweist.

2. Abgasreinigungsanlage eines Ottomotors mit Direkteinspritzung, **dadurch gekennzeichnet, dass** die Abgasreinigungsanlage (12) einen Adsorber mit Partikelabscheidefunktion (16) nach Anspruch 1 aufweist.

3. Abgasreinigungsanlage nach Anspruch 2, **dadurch gekennzeichnet, dass** dem Adsorber (16) ein Dreiwegekatalysator (18) nachgeordnet ist.

4. Abgasreinigungsanlage nach Anspruch 2 oder 3, **dadurch gekennzeichnet, dass** der Adsorber (16) in einem Bypass des Abgasreinigungssystems (12) angeordnet ist.

5. Verwendung eines Adsorber mit Partikelabscheidefunktion nach Anspruch 1 zur temporären Zwischenspeicherung von gasförmigen Abgasbestandteilen eines Ottomotors (10) mit Direkteinspritzung, nämlich von Kohlenwasserstoffen (HC) und/oder Stickoxiden (NOₓ).

6. Verfahren zur Reinigung von Abgas eines Ottomotors mit Direkteinspritzung, **dadurch gekennzeichnet, dass** das Abgas zur Entfernung von Kohlenwasserstoffen (HC), Stickoxiden (NOₓ) und Partikeln über ein Adsorber mit Partikelabscheidefunktion(16) nach Anspruch 1 und anschließend über einen Dreiwegekatalysator (18) geleitet wird.

7. Verfahren zur Reinigung von Abgas eines Ottomotors nach Anspruch 6, **dadurch gekennzeichnet, dass** das Abgas nur bis Erreichen einer definierten Temperatur des Dreiwegekatalysators (18) der Arbeitstemperatur über den Adsorber (16) geleitet wird.
